# EUROPEAN PATENT APPLICATION

(11) **EP 4 644 714 A1**
(43) Date of publication of application: **05.11.2025**
(21) Application number: 23912317.7
(22) Date of filing: 28.12.2023
(51) Int. Cl.: F16B 39/30, F16B 39/18

(54) **SCREW STRUCTURE**

(30) Priority: 31.12.2022 JP 2022212878
(71) Applicant: HARDLOCK Industry Co., Ltd., Higashiosaka-shi, Osaka 577-0063 (JP)
(72) Inventor: WAKABAYASHI, Katsuhiko, deceased (JP)
(74) Representative: JENSEN & SON
(86) International application number: PCT/JP2023/047272
(87) International publication number: WO 2024/143540

(57) **Abstract**

A screw structure capable of reducing the proportion of distributed load of fastening axial force applied to the first thread crest while generating an anti-loosening effect through prevailing torque. In a screw structure comprising a bolt (1) and a nut (2), the female thread (20) of the nut (2) has a first threaded region (21) and a second threaded region (22) with convex arcuate flank surfaces (22a, 22b). When the female thread (20) engages with the male thread (10) of the bolt (1), in the first threaded region (21), the pressure flank (21a) contacts the male thread (10) while maintaining a gap between the clearance flanks (21b, 10b). In the second threaded region (22), both the pressure and clearance flanks (22a, 22b) of the female thread (20) contact the pressure and clearance flanks (10a, 10b) of the male thread (10), respectively.

## Description

### TECHNICAL FIELD

The present invention relates to a screw structure.

### BACKGROUND ART

The applicant has been developing anti-loosening nuts and has disclosed an anti-loosening nut with convex arcuate surfaces on the flank surfaces of the female thread in Patent Document 1.

By forming the flank surfaces as convex arcuate surfaces, the play or gap between the female thread of the nut and the male thread of the bolt is substantially eliminated, thereby suppressing relative movement of the nut against the bolt in vibration environments and reducing the occurrence of nut loosening. Additionally, not only do the pressure flanks of the female and male threads contact each other, but the clearance flanks also contact each other, generating prevailing torque during nut tightening operations, which provides an anti-loosening effect.

### PRIOR ART DOCUMENTS

### PATENT DOCUMENTS

Patent Document 1: JP2021-105444A1

### SUMMARY OF THE INVENTION

### PROBLEMS TO BE SOLVED BY THE INVENTION

Generally, when a nut is fastened to a bolt, the fastening axial force is distributed among multiple thread portions appearing in the longitudinal section of the female thread. It is known that the proportion of distributed load of the fastening axial force applied to the first thread portion of the female thread, the first thread portion being closest to the nut seating surface, is the largest.

When excessive axial force occurs, the first thread portion fractures first, followed by progressive fracture until all thread portions break. Even with axial force insufficient to cause fracture, when a fastened nut is placed in a vibration environment, the first thread portion bearing the large distributed load may deform microscopically in the axial direction due to impact forces from vibration, potentially resulting in significant reduction of fastening axial force.

The purpose of this invention is to reduce the proportion of distributed load of the fastening axial force applied to the first thread portion while generating an anti-loosening effect through prevailing torque.

### MEANS FOR SOLVING THE PROBLEMS

The screw structure according to the present disclosure may comprise a first screw member having a threaded shaft with a male thread formed on its outer circumference, and a second screw member having a threaded hole with a female thread formed on its inner circumference that engages with the male thread. The female thread may comprise a first threaded region and a second threaded region. Preferably, when the male thread is engaged with the female thread, in the first threaded region, the pressure flank of the female thread contacts the pressure flank of the male thread while a gap exists between the clearance flank of the female thread and the clearance flank of the male thread. More preferably, in the second threaded region, the male thread and the female thread are designed such that both the pressure flank and the clearance flank of the female thread contact the pressure flank and the clearance flank of the male thread, respectively. Preferably, in the first threaded region, the pressure flank and the clearance flank of the female thread are flat in longitudinal section. Preferably, in the second threaded region, at least one of the pressure flank and the clearance flank of the female thread has a convex arcuate shape in longitudinal section.

A threaded member having a thread according to the present disclosure comprises a first threaded region and a second threaded region. Preferably, in the first threaded region, the pressure flank and the clearance flank of the thread are flat in longitudinal section. Preferably, in the second threaded region, at least one of the pressure flank and the clearance flank of the thread has a convex arcuate shape in longitudinal section.

### EFFECTS OF THE INVENTION

According to the present disclosure, it is possible to reduce the proportion of distributed load of the fastening axial force applied to the first thread portion while generating an anti-loosening effect through prevailing torque.

### BRIEF DESCRIPTION OF THE DRAWINGS

[FIG. 1] Fig. 1 is a longitudinal cross-sectional view of an exemplary screw structure according to the present disclosure.
[FIG. 2] Fig. 2 is a perspective view showing an example of a convex portion.
[FIG. 3] Fig. 3 is a perspective view showing another example of a convex portion.
[FIG. 4] Fig. 4 is a longitudinal cross-sectional view of an exemplary screw member according to the present disclosure.
[FIG. 5] Fig. 5 is a longitudinal cross-sectional view illustrating press working for diameter reduction and deformation of the convex portion.

### EMBODIMENTS FOR CARRYING OUT THE INVENTION

The screw structure according to the present disclosure comprises a first screw member having a threaded shaft with a male thread formed on its outer circumference and a second screw member having a threaded hole with a female thread formed on its inner circumference that engages with said male thread. The female thread comprises a first threaded region and a second threaded region.

Preferably, when the male thread is engaged with the female thread, in the first threaded region, the pressure flank of the female thread contacts the pressure flank of the male thread while maintaining a gap between the clearance flank of the female thread and the clearance flank of the male thread. More preferably, in the second threaded region, the male thread and the female thread are designed such that both the pressure flank and the clearance flank of the female thread contact the pressure flank and the clearance flank of the male thread, respectively.

The wording "state in which the male thread is engaged with the female thread" includes not only the state in which the first and second screw members are fastened but also the intermediate state during the fastening operation where no fastening torque is generated.

The first screw member is typically a bolt having a threaded shaft. The threaded shaft is typically a solid shaft but may also be a tubular structure. The first screw member may utilize a conventional bolt manufactured according to required standards. The male thread has a predetermined thread profile defined by a predetermined thread pitch and predetermined major and minor diameters of the male thread. Both the pressure and clearance flanks of the male thread may be flat in longitudinal section.

The second screw member is typically a nut having a threaded hole. The first and second threaded regions each have a predetermined length in the axial direction. Preferably, the first and second threaded regions each have an axial length greater than one pitch of the female thread. More preferably, the first and second threaded regions have an axial length greater than two pitches of the male thread. The first and second threaded regions are positioned at different locations in the axial direction. The first and second threaded regions may be arranged continuously in the axial direction, or a third threaded region may be provided between the first and second threaded regions. The female thread preferably has different thread profiles in the first and second threaded regions to produce the aforementioned contact conditions at the flank surfaces.

Preferably, in the first threaded region, the pressure flank and the clearance flank of the female thread are flat in longitudinal section. Preferably, in the second threaded region, at least one of the pressure flank and the clearance flank of the female thread has a convex arcuate shape in longitudinal section. More preferably, in the second threaded region, both the pressure flank and the clearance flank of the female thread have a convex arcuate shape in longitudinal section.

Preferably, the second screw member comprises a body and a convex portion projecting axially from an end face of the body and having an outer diameter smaller than that of the body, with the threaded hole extending through both the body and the convex portion. The body may be in the form of a hexagonal nut or a cylindrical nut. The convex portion may be cylindrical or truncated conical in shape, or may have a structure comprising multiple blocks arranged circumferentially and connected by thin-walled connecting portions, as disclosed in Patent No. 3272265. "Having an outer diameter smaller than that of the body" means that the average radial wall thickness from the outer circumference of the convex portion to the thread inner circumference is smaller than the average radial wall thickness from the outer circumference of the body to the thread inner circumference. The convex portion, with its wall thickness thinner than that of the body, undergoes slight radial outward deformation due to reaction forces acting on both flank surfaces when advancing the female thread onto the male thread, thereby suppressing the occurrence of seizure.

Preferably, at least a portion of the first threaded region of the female thread is provided in the body. Preferably, at least a portion of the second threaded region of the female thread is provided in the convex portion. With this arrangement, when the second screw member is threaded onto the first screw member from the body side, initially only the first threaded region, which has play between it and the male thread, engages with the male thread at the beginning of the tightening operation, allowing the second screw member to advance smoothly. When the second threaded region of the female thread begins to engage with the male thread, the pressure and clearance flanks of the female thread in the second threaded region contact the male thread, generating a substantial prevailing torque due to the frictional resistance. However, since all of the first threaded region has already engaged with the male thread at that point, it is possible to advance the second screw member onto the first screw member by rotating the second screw member relative to the first screw member with a tightening torque greater than the prevailing torque.

Preferably, a portion of the second threaded region of the female thread is provided in the body, and the portion of the second threaded region provided in the convex portion has a smaller diameter than the portion of the second threaded region provided in the body when the female thread is not engaged with the male thread. Such a structure can be obtained by radially inward deformation of the convex portion after forming the female thread. The portion of the second threaded region provided in the convex portion achieves a diameter equivalent to that of the portion of the second threaded region provided in the body when the female thread is engaged with the male thread, as the convex portion undergoes slight radial outward deformation during advancement of the female thread onto the male thread.

### EMBODIMENT OF THE SCREW MEMBER

The screw member according to the present disclosure comprises a thread having a first threaded region and a second threaded region. Preferably, in the first threaded region, the pressure flank and the clearance flank of said thread are flat in longitudinal section. Preferably, in the second threaded region, at least one of the pressure flank and the clearance flank of the thread has a convex arcuate shape in longitudinal section. The thread of the screw member may be a male thread or a female thread.

Preferably, in the second threaded region, both the pressure flank and the clearance flank of the female thread have a convex arcuate shape in longitudinal section.

Preferably, the screw member is a nut comprising a nut body and a convex portion projecting axially from an end face of the nut body and having an outer diameter smaller than that of the nut body. In this case, the thread is a female thread formed on the inner circumference of a threaded hole extending through both the nut body and the convex portion.

Preferably, at least a portion of the first threaded region of the female thread is provided in the nut body. Preferably, at least a portion of the second threaded region of the female thread is provided in the convex portion.

Preferably, another portion of the second threaded region of the female thread is provided in the nut body. Preferably, the portion of the second threaded region provided in the convex portion has a smaller diameter than the portion of the second threaded region provided in the nut body.

### EXAMPLES

Suitable examples of the screw member and screw structure according to the present disclosure will be described below with reference to the drawings.

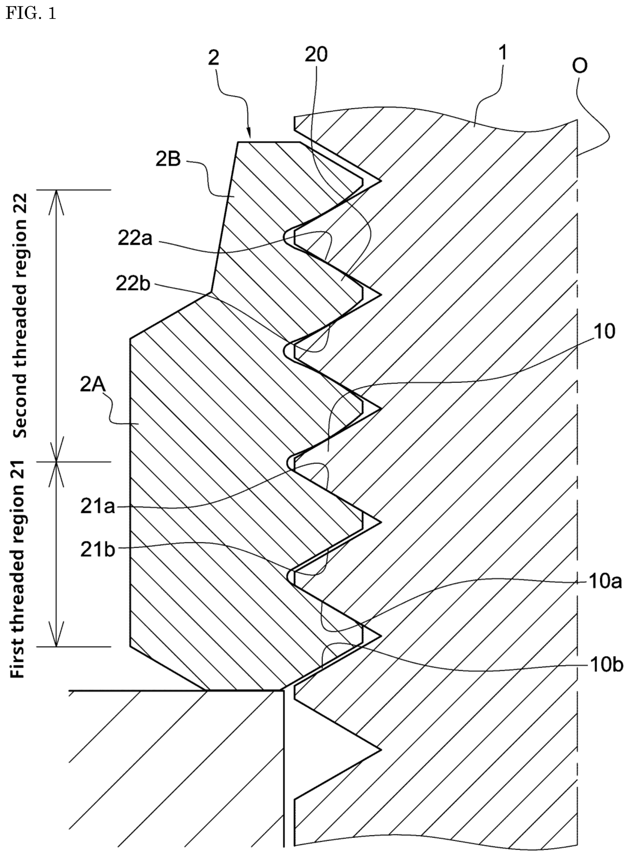

Figure 1 shows an example of a screw member and screw structure according to the present disclosure. The screw structure comprises a bolt 1, which is the first screw member, and an anti-loosening nut 2, which is the second screw member. Bolt 1 has a threaded shaft with a male thread 10 formed on its outer circumference. Nut 2 has a threaded hole with a female thread 20 formed on its inner circumference that engages with the male thread 10. Bolt 1 may be any commercially available conventional bolt.

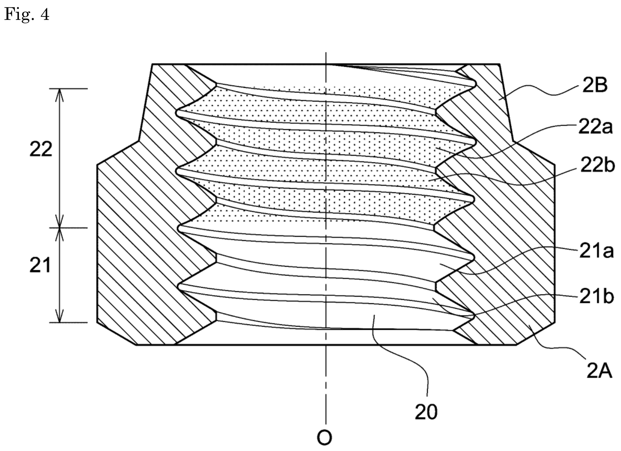

As also shown in Fig. 4, the female thread 20 of nut 2 has a first threaded region 21 disposed on the side of the seating surface (in the illustrated example, the bottom surface of the nut) and a second threaded region 22 disposed axially further from the seating surface than the first threaded region 21.

When the male thread 10 is engaged with the female thread 20, in the first threaded region 21, the pressure flank 21a of the female thread 20 contacts the pressure flank 10a of the male thread 10, but there is a gap between the clearance flank 21b of the female thread 20 and the clearance flank 10b of the male thread 10. Also, when the male thread 10 is engaged with the female thread 20, in the second threaded region 22, the pressure flank 22a and the clearance flank 22b of the female thread 20 contact the pressure flank 10a and the clearance flank 10b of the male thread 10, respectively.

In the first threaded region 21, the pressure flank 21a and the clearance flank 21b of the female thread 20 are flat in longitudinal section.

In the second threaded region 22, both the pressure flank 22a and the clearance flank 22b of the female thread 20 have a convex arcuate shape in longitudinal section. In Figure 4, the convex arcuate flank surfaces 22a and 22b visible at the far side of the cross-section are indicated by shading. Alternatively, one of the pressure flank 22a and the clearance flank 22b may have a convex arcuate shape in longitudinal section while the other may be flat in longitudinal section.

Nut 2 comprises a nut body 2A having a seating surface and a convex portion 2B projecting axially from the top of the nut body 2A and having an outer diameter smaller than that of the nut body 2A. A threaded hole having the female thread 20 extends through both the nut body 2A and the convex portion 2B.

The first threaded region 21 of the female thread 20 is provided at the bottom of the nut body 2A, and the second threaded region 22 extends from the top of the nut body 2A to the convex portion 2B.

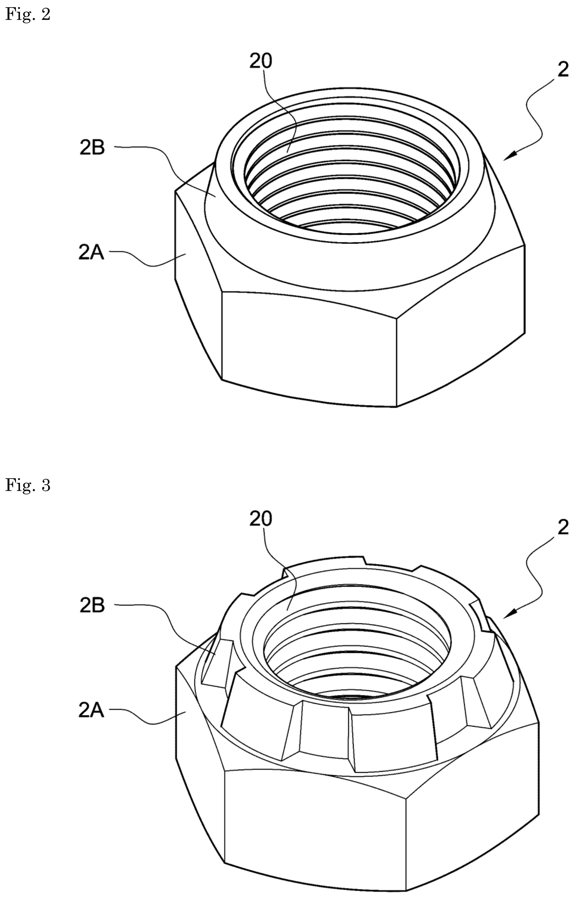

The external shape of the nut body 2A and the convex portion 2B is not particularly limited, but in one example, as shown in Figure 2, the nut body 2A is configured as a hexagonal nut and the convex portion 2B is configured as a truncated conical shape. The convex portion 2B has its maximum outer diameter at its bottom. The nut body 2A has its minimum outer diameter at the center of the left and right sides of the hexagonal nut sides. The maximum outer diameter of the convex portion 2B is smaller than the minimum inner diameter of the nut body 2A. Consequently, the convex portion 2B is more easily deformable in the radial direction than the nut body 2A.

The convex portion 2B may comprise multiple blocks arranged circumferentially, as shown in Figure 3. Preferably, adjacent blocks are connected and integrated by connecting portions that are thinner than the radial wall thickness of the blocks themselves. For example, a structure in which multiple blocks are connected by connecting portions can be obtained by forming multiple longitudinal grooves on the outer circumference of the convex portion 2B. If slits penetrating in the radial direction were provided between adjacent blocks to structurally separate the multiple blocks, the radial deformability of each block would become excessive, limiting the effectiveness of the arcuate flank surfaces.

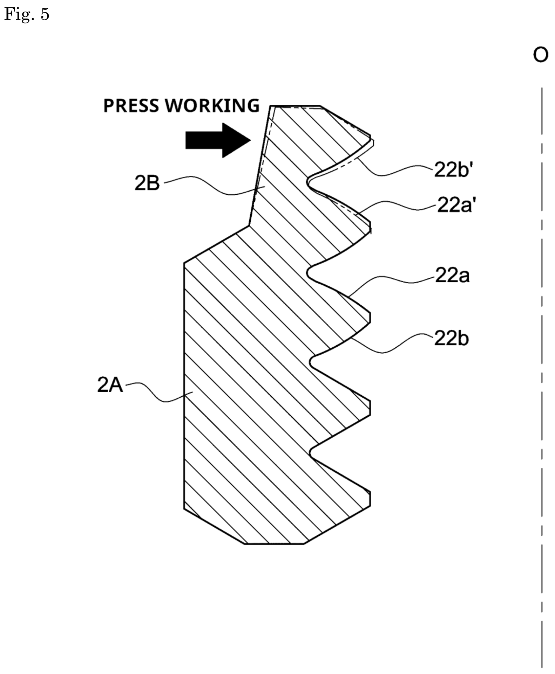

By applying press working from the radial outward direction to the convex portion 2B as shown in Figure 5, the portion 22a', 22b' of the second threaded region 22 provided in the convex portion 2B may be made smaller in diameter than the portion 22a, 22b of the second threaded region 22 provided in the nut body 2A when the female thread 20 is not engaged with the male thread 10. Although commercially available bolts have manufacturing tolerances in their male threads, by reducing the diameter of the female thread on the inner circumference of the convex portion 2B, the pressure and clearance flanks 22a', 22b' of the second threaded region 22 can reliably contact the pressure and clearance flanks of the male thread when the female thread is engaged with the male thread. Additionally, the magnitude of the generated prevailing torque can be adjusted by adjusting the amount of diameter reduction deformation of the convex portion 2B.

According to the screw structure of this example, stress concentration on the first thread portion of the female thread 20 of the nut 2 can be avoided while suppressing seizure, thereby improving resistance to axial force. Furthermore, even if the seating surface pressure momentarily disappears in a vibration environment, axial vibration of the female thread relative to the male thread is prevented because the male and female threads are in contact on both flank surfaces, providing a high anti-loosening effect.

## Claims

1. A screw structure comprising: a first screw member having a threaded shaft with a male thread formed on its outer circumference, and a second screw member having a threaded hole with a female thread formed on its inner circumference that engages with the male thread;
wherein the female thread comprises a first threaded region and a second threaded region; and
wherein, when the male thread is engaged with the female thread:
in the first threaded region, a pressure flank of the female thread contacts a pressure flank of the male thread while a gap exists between a clearance flank of the female thread and a clearance flank of the male thread; and
in the second threaded region, both the pressure flank and the clearance flank of the female thread contact the pressure flank and the clearance flank of the male thread, respectively.

2. The screw structure according to claim 1,
wherein in the first threaded region, the pressure flank and the clearance flank of the female thread are flat in longitudinal section, and
wherein in the second threaded region, at least one of the pressure flank and the clearance flank of the female thread has a convex arcuate shape in longitudinal section.

3. The screw structure according to claim 2,
wherein in the second threaded region, both the pressure flank and the clearance flank of the female thread have the convex arcuate shape in longitudinal section.

4. The screw structure according to claim 1, 2, or 3,
wherein the second screw member comprises a body and a convex portion projecting axially from an end face of the body and having an outer diameter smaller than that of the body, with said threaded hole extending through both the body and the convex portion,
at least a portion of the first threaded region of the female thread is provided in the body, and
at least a portion of the second threaded region of the female thread is provided in the convex portion.

5. The screw structure according to claim 4,
wherein a portion of the second threaded region of the female thread is provided in the body, and
the portion of the second threaded region provided in the convex portion has a smaller diameter than the portion of the second threaded region provided in the body before the female thread is engaged with the male thread.

6. The screw structure according to claim 1, 2, or 3, wherein the first screw member is a bolt and the second screw member is a nut.
